# EUROPEAN PATENT APPLICATION

(11) **EP 1 714 857 A1**
(43) Date of publication of application: **25.10.2006**
(21) Application number: 05709792.5
(22) Date of filing: 31.01.2005
(51) Int. Cl.: B62D 25/10

(54) **WORK MACHINE AND DEVICE COVER USED FOR THE WORK MACHINE**

(30) Priority: 04.02.2004 JP 2004028334
(71) Applicant: HITACHI CONSTRUCTION MACHINERY CO., LTD., Tokyo 112-0004 (JP)
(72) Inventor: MATSUSHITA, M.; c/o Tsuchiura Works, Hitachi, Tsuchiura-shi, Ibaraki 300-0013 (JP); YAMAMOTO, M.; c/o Tsuchiura Works, Hitachi, Tsuchiura-shi, Ibaraki 300-0013 (JP); TOYOOKA, T.; c/o Tsuchiura Works, Hitachi, Tsuchiura-shi, Ibaraki 300-0013 (JP); YASUDA, M.; c/o Tsuchiura Works, Hitachi, Tsuchiura-shi, Ibaraki 300-0013 (JP)
(74) Representative: Beetz & Partner
(86) International application number: PCT/JP2005/001727
(87) International publication number: WO 2005/075280

(57) **Abstract**

A device cover (21) is formed as a whole in a bent L-shape by an upper face (21A) covering a device accommodation space (11) from an upper side, a side face (21B) covering the device accommodation space (11) from a right side, and a convex curved bent face (21C) connecting the upper face (21A) and the side face (21B). In addition, the device cover (21) is separated into an upper face separate cover element (22) and a side face separate cover element (25) at a joint position (28) extending in a direction from the front toward the rear and then, these separate cover elements (22) and (25) are integrally connected by the use of a connecting plate (29).

## Description

### TECHNICAL FIELD

The present invention relates to a working machine equipped with an automotive vehicular body, such as, for example, a lift truck and a hydraulic excavator, and a device cover used with the working machine.

### BACKGROUND ART

Generally, a working machine, for example, a lift track, which is used for lifting of freight or cargo from the ground to a height for a cargo handling job, is largely constructed by an automotive vehicular body and a telescopic working device provided on the vehicular body to be liftable and to be extensible in a longitudinal direction of the body.

The vehicular body of the lift truck is constituted by a frame serving as a support structure, an engine mounted on the frame, and a device cover for covering devices such as the engine and a heat-exchanger and so forth from an upper side and lateral side to internally define an appreciable space for accommodation of the devices therein (for example, see Japanese Patent No. 2559831).

The conventional device cover of the lift truck of this kind is usually attached to the frame by the use of a hinge member so as to be freely opened and closed in order to quickly perform an inspection work for the devices such as the engine and the heat-exchanger. Since this device cover is covering the devices such as the engine and so forth from the upper side and the lateral side simultaneously, an overall area of the device cover must have become large size.

At this stage, for example, when it is considered that the device cover is integrally formed by press-forming of a steel sheet, the deeper the pressed sheet is formed, the larger a press machine is needed. Therefore, large scale facilities are required for the pressing operation and resulting in an increase in the manufacturing cost of the device cover. Alternatively, when it is considered that the device cover is integrally formed of a resin material, a molding die, which corresponds to the device cover must also have a large size, resulting in an increase in the manufacturing cost of the device cover.

Meanwhile, another conventional working machine has been known in which the device cover is constituted by a plural number of separate covers capable of being formed as one part to cover devices such as an engine so as to be freely opened and closed (for example, see Japanese Utility Model Laid-Open No. 07-15484).

However, the device cover of the working machine according to the another conventional art is provided to simply cover the devices such as the engine from the sides to be freely opened and closed, and therefore, the device cover has, as a whole, an approximately rectangular shape formed of a flat plate. This makes it difficult to apply the device cover of above-described another conventional art to the device cover capable of simultaneously covering the devices from the upper side and the lateral side to be freely opened and closed.

To the contrary, when afore described integral forming of the device cover is employed to have a large covering area sufficient for openably and closably accommodating therein the devices from the upper side and the lateral side, the problem is encountered such that the manufacturing cost of the device cover must increase, as described before.

Further, in the device cover integrally formed of a resin material, a breakage of the device cover such as a crack and a fracture easily occurs due to its contact with an obstacle or the like during traveling of the working machine. In this case, in the device cover integrally formed of the resin material, it is difficult to repair or fix only a broken part thereof. Therefore, even when a part of the device cover is broken, it is necessary to repair and fix the device cover entirely. As a result, a problem must be encountered such that the operational efficiency of the repairing of the device cover is deteriorated.

### DISCLOSURE OF THE INVENTION

In view of aforementioned problem encountered by the conventional art, the present invention was made. Namely, an object of the present invention is to provide a working machine and a device cover used for the working machine to be capable of reducing a manufacturing cost of the device cover and improving an operation efficiency during the repairing and fixing of a broken device cover.
(1) In order to solve aforementioned problem, the present invention is applied to a working machine having an automotive vehicular body and a working device mounted on the vehicular body, the vehicular body providing a frame serving as a support structure, an engine mounted on the frame, and a device cover for openably and closably covering devices including the engine to define a device accommodation space therein.
   The present invention is characterized in that the device cover has a bent L-shape by being formed with an upper face located above the devices, a side face located on a side of the devices, and a convex curved bent face connecting the upper face and the side face, and the device cover is also constituted by a plural number of separate cover elements separated at a joint position extending in a direction from front to rear.
   In this way, when the separate cover elements separated into a plural number of parts are mutually connected together, one piece of device cover can be assembled and formed. Accordingly, in comparison with, for example, one piece of integrally formed device cover having a large area thereof, the manufacturing cost can be curtailed. Also, if the device cover is partially broken, by only replacing the cover separate element containing therein a broken part, the operation efficiency during repairing of the broken device cover can be improved. Further, since the device cover is formed in the bent L-shape by being comprised of an upper face located above the devices such as an engine and so forth, a side face located on the side of the devices, and a convex curved bent face which is provided for connecting the upper face and the side face, aesthetic appearance of the device cover can be enhanced.
(2) Preferably, in accordance with the present invention, the plural number of separate cover elements are constituted by plate members covering the devices, and a reinforcing member provided on the plate members extended in a direction from upper to lower along the bent shape.
   With this structure, strength of the separate cover elements can be increased, and the strength of the overall device cover formed by connecting respective separate cover elements can be improved.
(3) Further, in accordance with the present invention, connecting member may be provided at a joint position close to separate cover elements of the device cover, and the plural number of separate cover elements are mutually connected together by using the connecting members.
   In this case, since the plural number of separate cover elements are connected together by employing the connecting members, every separate cover element may be disconnected from the other element when the connecting members are separated. Accordingly, when the device cover is broken, the separate cover element containing therein the broken part may be easily replaced. This fact contributes to improving of the operation efficiency during the repairing of the broken device cover.
(4) In addition, in accordance with the present invention, the device cover may be arranged to be integrally opened and closed when the plural number of separate cover elements are connected together at the joint position.
   In this way, since the plural number of separate cover elements are mutually connected, when an inspection is performed for the devices, it is possible to easily open and close a device accommodation space where the devices are accommodated therein by an integrally formed device cover by connecting each separate cover element together.
(5) Further, in accordance with the present invention, the device cover may be integrally constituted by the plural number of separate cover elements connected at the joint position, and an upper face side of the device cover is attached openably and closably to the frame.
   With this structure, when the inspection is performed for the devices, it is possible to easily open and close the device accommodation space where the devices are accommodated therein by the device cover integrally formed by connecting respective separate cover elements. Also, the upper face side of the device cover integrally formed is attached to the frame so as to be freely opened and closed. Therefore, for example, the upper face side of the device cover may be pivotally supported on the frame.
(6) Further, in accordance with the present invention, the plural number of separate cover elements may be attached to the frame so as to be individually opened and closed, and each of the separate cover elements is independently opened and closed.
   In this way, each of the plural number of separate cover elements is separately attached to the frame freely opened and closed. Therefore, each of the separate cover elements may be independently opened and closed, in a mutually separated state Accordingly, when each of the separate cover elements is opened, a large working space can be secured around the devices, and an operation for the inspection can be efficiently carried out for the devices within the large working space.
(7) Further, according to the present invention, the device cover may be constituted in a manner such that the plural number of separate cover elements are separated at the position of the bent face. Thus, a curvature of the bent face contained in each separate cover element may be made small. Accordingly, it should not form the separate cover element containing the bent face with a large curvature corresponding to the bent face of the device cover, and each of the separate cover elements can be easily formed.
(8) Further, in accordance with the present invention, the device cover may be constituted by two pieces of separate cover elements including an upper face separate cover element covering an upper portion of the devices, and a side face separate cover element covering a side portion of the devices.
   Thus, only the side face separate cover element, which might be easily broken due to contacting with a obstacle or the like, may be replaced with a new side face separate cover element, and connected to the upper face separate cover element.
(9) Further, according to the present invention, the device cover used in a working machine for openably and closably covering the devices including an engine provided in the working machine to internally define a device accommodation space therein, wherein the device cover is constituted by the plural number of separate cover elements separated at a joint position extending in a direction from front to rear and connected at the joint position, and the device cover is formed a bent L-shape with an upper face located above the devices, a side face located on the side of the devices, and a convex curved bent face connecting the upper face and side face.

With this structure, by mutually connecting the separate cover elements separated into a plural number of parts, one piece of device cover may be formed. This contributes to reduce the manufacturing cost of the device cover. Also, when a portion of the device cover is broken, only the separate cover element containing the broken portion can easily be replaced with new element.

### BRIEF DESCRIPTION OF THE DRAWINGS

Fig. 1 is a perspective view of a lift truck to which a device cover according to a first embodiment of the present invention is applied;
Fig. 2 is a perspective view showing an open state of the device cover in Fig. 1;
Fig. 3 is a plan view viewing from upside, with a frame of the lift truck equipped with a cab and the device cover or the like;
Fig. 4 is an enlarged cross-sectional view viewing from a direction taken along by an arrow IV-IV in Fig. 1, with the device cover set in its close position;
Fig. 5 is an enlarged cross-sectional view showing the state of the device cover set in its open position;
Fig. 6 is an exploded perspective view showing an upper face separate cover element and a side face separate cover element, set in a separated state thereof;
Fig. 7 is an exploded perspective view of the upper face separate cover element, the side face separate cover element, and a connecting plate or the like viewing from a device accommodation space side;
Fig. 8 is an expanded perspective view similar to Fig. 4 showing the device cover according to the second embodiment, set in a close position thereof;
Fig. 9 is an expanded cross-sectional view similar to Fig. 5 showing the device cover according to the second embodiment, set in an open position thereof;
Fig. 10 is a perspective view showing the upper face separate cover element and the side face separate cover element according to the third embodiment, set in a separated state thereof;
Fig. 11 is an enlarged cross-sectional view similar to Fig. 4 showing the device cover according to the third embodiment, set in a close position thereof; and
Fig. 12 is an exploded perspective view similar to Fig. 6 showing a modified example of the device cover.

### BEST MODE FOR CARRYING OUT THE INVENTION

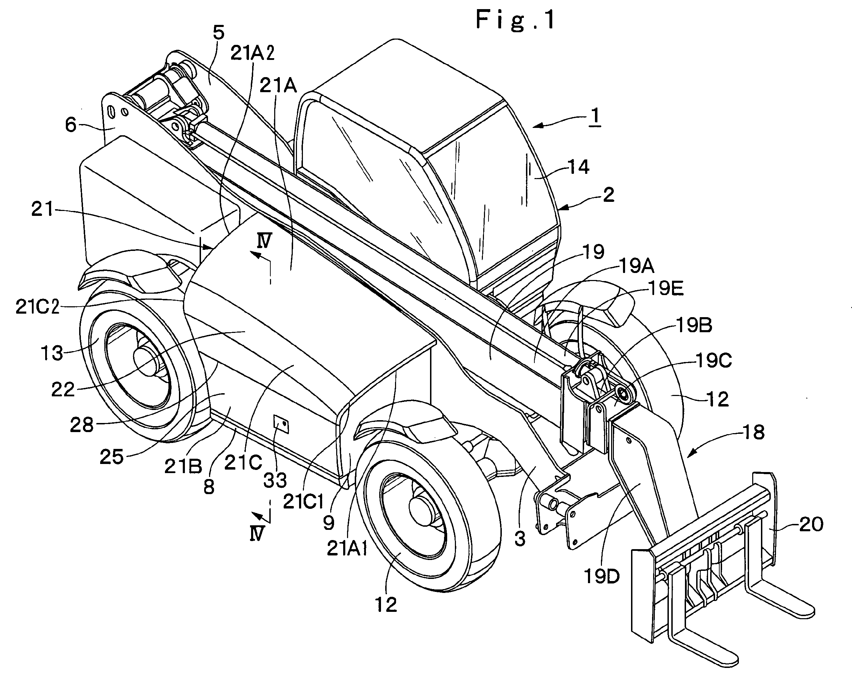

Hereinafter, a detailed explanation of the working machine and the device cover used with the working machine according to the present invention will be provided by way of their preferred embodiments, which are applied to an example of a lift truck, with reference to Figs. 1 through 12 of the accompanying drawings.

Referring first to Figs. 1 through 7, there is shown a first embodiment of the present invention. In these figures, the indicated at 1 is a lift truck which is arranged to serve as a working machine. The lift truck 1 is largely constituted of a wheeled automotive vehicular body 2 and a working device 18 as will be described later, for lifting up freight goods to a height from a ground level after self-propelling to a working site by use of the working device 18. The vehicular body 2 of the lift truck 1 is constituted of a frame 3, a cab 14, an engine 15, a heat-exchanger 17, and a device cover 21 and so forth as will be described later.

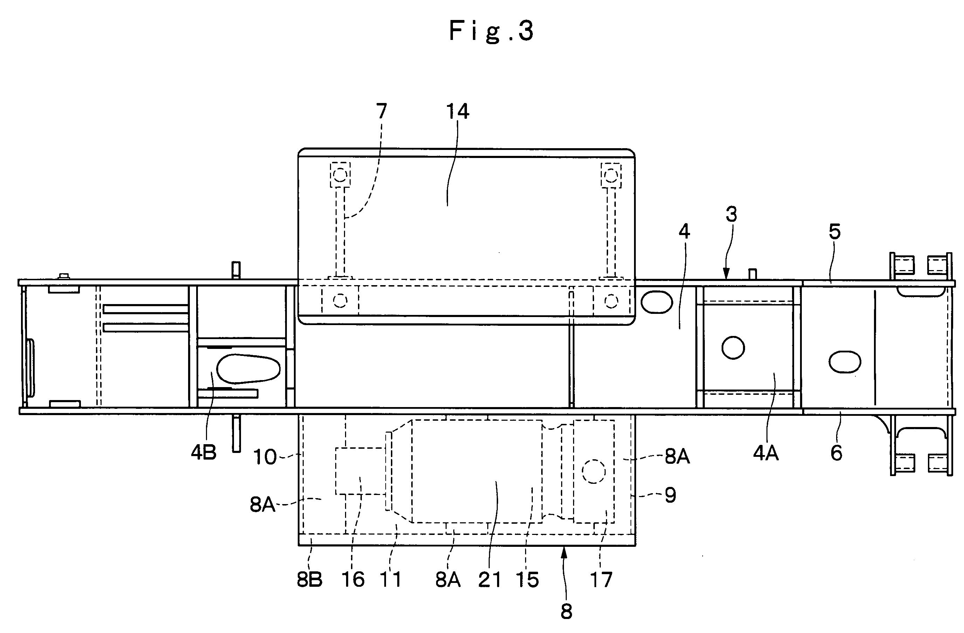

The indicated at 3 is the frame as a base of the vehicular body 2. As shown in Fig. 3, the frame 3 constitutes a strong support structure largely including a bottom plate 4 that is fabricated from a thick steel sheet and so forth, and extends in a direction from front to rear, vertical plates 5 and 6 on the right and left side, that are also fabricated from the thick steel sheet and so forth, and extend in a direction from front to rear with the bottom plate 4 interposed therebetween, a cab supporting portion 7 and a device supporting portion 8 disposed on the right and left side of each of the vertical plates 5 and 6, respectively. In addition, a front wheel support portion 4A supporting each front wheel 12 which will be described later is provided in the front side of the bottom plate 4, and a rear wheel support portion 4B supporting each rear wheel 13 which will be described later is provided in the rear side of the bottom plate 4.

In this state, the cab supporting portion 7 is provided to be extended left side from the left vertical plate 5 at an intermediate portion of the left vertical plate 5, and the cab supporting portion 7 supports the cab 14 as will be described later. Also, the device supporting portion 8 is provided to be extended right side from the right vertical plate 6 at the intermediate portion of the right vertical plate 6, and the device supporting portion 8 supports the devices such as an engine 15 and a heat-exchanger 17 which will be described later.

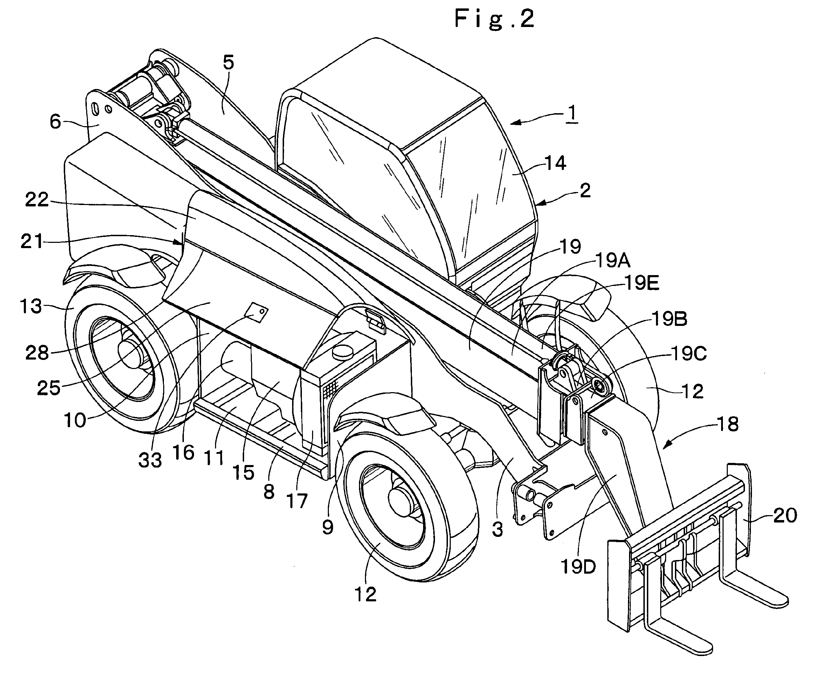

Here, as shown in Fig. 2 and Fig. 3, the device supporting portion 8 is constituted in a rectangular frame shape extending in a direction from front to rear as an entire body, by a plural number of lateral beams 8A extended right side from the right vertical plate 6 with a base end side secured to the right vertical plate 6, and a longitudinal beam 8B with D-type section secured to the tip end side of each lateral beam 8A and extending in a direction from front to rear. In addition, a front face plate 9 extending in a direction from upper to lower is provided on the front end side of the device supporting portion 8, and a rear face plate 10 extending in a direction from upper to lower and facing the front face plate 9 is provided in the rear end side of the device supporting portion 8.

The indicated at 11 is the device accommodation space provided in the right side part which is the opposite side of the cab 14 of the frame 3. The device accommodation space 11 is internally defined by the right vertical plate 6 of the frame 3, the device supporting portion 8, the front face plate 9, the rear face plate 10, and the device cover 21 which will be described later. In the device accommodation space 11, various devices such as the engine 15, a hydraulic pump 16, and the heat-exchanger 17 and so forth are accommodated.

The indicated at 12 are right and left front wheels provided on the front side of the frame 3. Axles of these right and left front wheels 12 are rotatably supported on a front wheel support portion 4A of the bottom plate 4. Further, the right and left front wheels 12 are steered by a steering device (not shown) which is provided in a cab 14 to control a traveling direction of the vehicular body 2.

The indicated at 13 are right and left rear wheels provided on the rear side of the frame 3. Axles of these right and left rear wheels 13 are rotatably supported on a rear wheel support portion 4B of the bottom plate 4. Further, the right and left rear wheels 13 let the vehicular body 2 run by the rotation of the hydraulic pressure motor (not shown) being transmitted through the axles or the like.

The indicated at 14 is the cab mounted on the cab supporting portion 7 of the frame 3. The cab 14 internally defines a driver's cab. The provided within the cab 14 are an operator's seat to be taken by an operator, a steering device for steering the right and left front wheels 12, and an operating lever for operating a working device 18 which will be described later and so forth (they are all not shown).

The indicated at 15 is an engine mounted on the device supporting portion 8 of the frame 3. The engine 15 is arranged in a longitudinal setting state extending in a direction from front to rear along the frame 3. In this state, the hydraulic pump 16 is mounted on the rear side of the engine 15. The engine 15 drives the hydraulic pump 16 to supply operating oil toward the hydraulic motor or the like for rotating the right and left rear wheels 13. Further, a cooling fan (not shown) for supplying a cooling air toward the heat-exchanger 17 as will be described later is provided on the front side of the engine 15.

The indicated at 17 is a heat-exchanger located on the front side of the engine 15 and mounted on the device supporting portion 8 of the frame 3. The heat-exchanger 17 includes a radiator for cooling engine cooling water, and an oil cooler or the like for cooling the operating oil supplied to a hydraulic actuator. The heat-exchanger 17 cools the engine cooling water and the operating oil by the cooling air from the cooling fan driven by the engine 15.

The devices such as an engine 15, a hydraulic pump 16, a heat-exchanger 17 and so forth are accommodated in the device accommodation space 11, and covered with the device cover 21 as will be described later, so as to be freely opened and closed.

The indicated at 18 is the working device for load handling job rotatably provided on the vehicular body 2. The working device 18 largely constituted of a boom 19 extending in a direction from front to rear, with the base end side pin-connected to an upper end side of the rear portion of the frame 3, and a loading tool 20 such as a fork attached to the tip end side of the boom 19 rotatably in a vertical direction.

In this state, the boom 19 is constituted of a first boom 19A of rectangular cylinder shape located on the outermost side, a second boom 19B of rectangular cylinder shape telescopically accommodated in the first boom 19A, a third boom 19C telescopically accommodated in the second boom 19B, and a boom head 19D provided on the tip end side of the third boom 19C diagonally downward with the loading tool 20 provided on the tip end side thereof.

A boom lifting cylinder (not shown) is provided between the first boom 19A and the frame 3 for up and down movement of an entire body of the boom 19 with respect to the vehicular body 2. Also a first boom cylinder 19E is provided between the first boom 19A and the second boom 19B to extend the second boom 19B out of the first boom 19A. In addition, a second boom cylinder (not shown) is provided between the second boom 19B and the third boom 19C to extend the third boom 19C out of the second boom 19B. When the first boom cylinder 19E is provided to extend the second boom 19B, the second boom cylinder also extends the third boom 19C in synchronization with this.

The working device 18 lifts the boom 19 against the vehicular body 2 with a cargo loaded on the loading tool 20, thereby to extend the second boom 19B from the first boom 19A of the boom 19, and also extend the third boom 19C from the second boom 19B. Thereby, the cargo loaded on the loading tool 20 is transported from the ground to a predetermined unloading spot.

The indicated at 21 is the device cover provided on the right side of the frame 3 for covering the devices freely open and close, such as the engine 15, the heat-exchanger 17 and so forth accommodated in the device accommodation space 11. Further, the device cover 21 is constituted of two sheet separate cover elements formed of an upper face separate cover element 22 and a side face separate cover element 25 as will be described later. In addition, the upper face separate cover element 22 and the side face separate cover element 25 are separated at a joint position 28 as will be describe later, and are connected to each other by using a connecting plate 29.

As shown in Fig. 1, the device cover 21 is formed in a bent L-shape as an entire body, by an upper face 21A located at the upper part of the engine 15 or the like and covering the device accommodation space 11 from the upper side, a side face 21B located at the right side of the engine 15 or the like and covering the device accommodation space 11 from the right side direction, and a convex curved bent face 21C connecting between the upper face 21A and the side face 21B.

In this case, the upper face 21A of the device cover 21 becomes an inclined face which is gradually inclined upward from a front end portion 21A1 to a rear end portion 21A2, and the bent face 21C is formed to gradually increase in height dimension from a front end portion 21Cl to a rear end portion 21C2. Thus, the upper face 21A of the device cover 21 is formed to gradually decrease in height dimension from the rear end portion 21A2 to the front end portion 21A1. Therefore, when the operator in the cab 14 views right frontward, the operator's view is prevented from being obstructed by the device cover 21, and the visual field of the operator can be largely secured. Moreover, by smoothly connecting between the upper face 21A and the side face 21B of the device cover 21 by the convex curved bent face 21C, the aesthetic appearance of the device cover 21 can be improved.

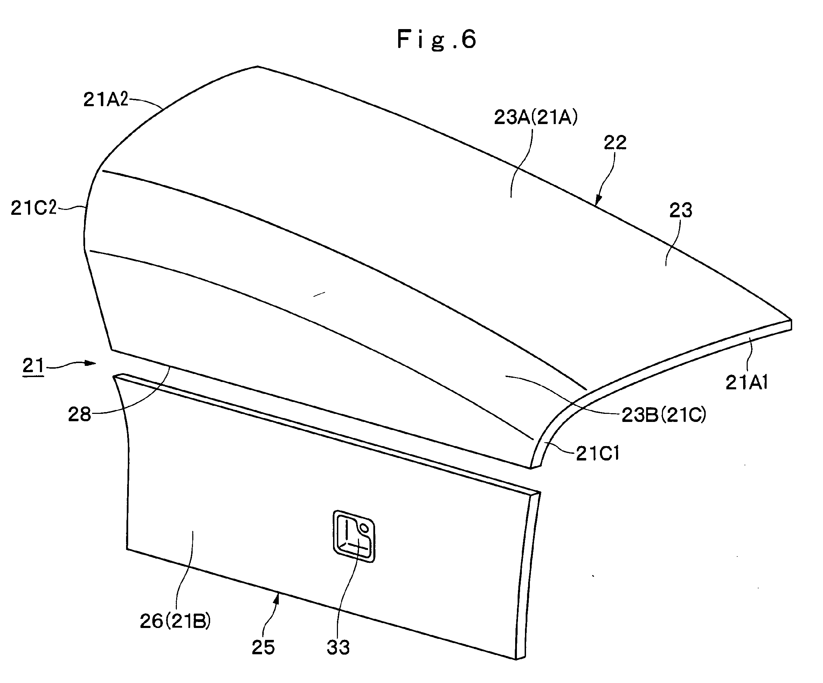

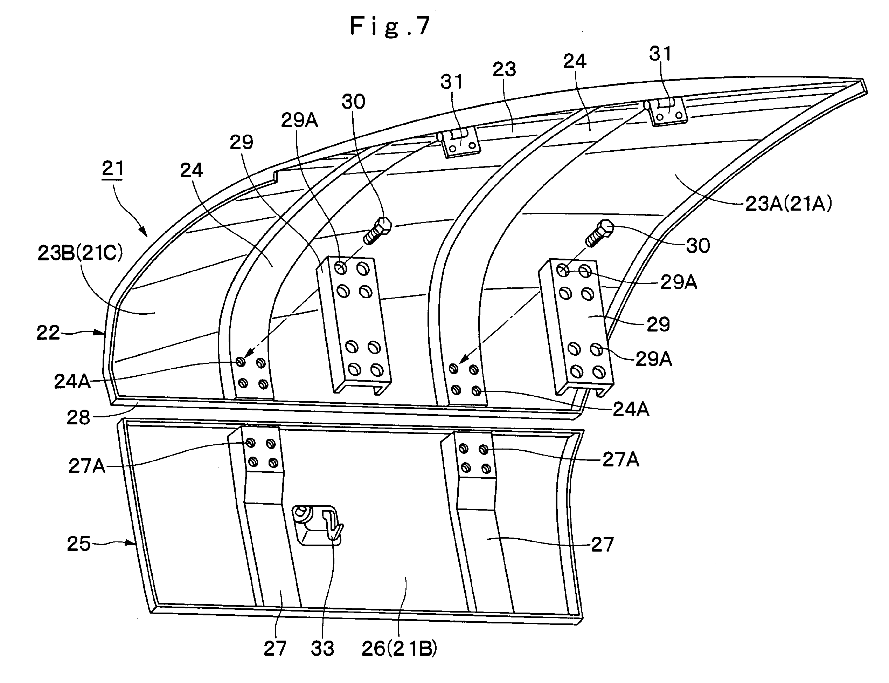

The indicated at 22 is an upper face separate cover element constituting the upper side portion of the device cover 21 for covering the devices accommodated in the device accommodation space 11 from the upper side. Further, as shown in Fig. 6 and Fig. 7, the upper face separate cover element 22 is constituted by a plate member 23 and each reinforcing member 24 which will be described later.

The indicated at 23 is the plate member becoming a main body portion of the upper face separate cover element 22. The plate member 23 is formed in a thin plate shape by using a resin material, for example. Further, the plate member 23 is composed of an upper face portion 23A constituting the upper face 21A of the device cover 21, and a bent face portion 23B constituting the bent face 21C of the device cover 21 and covering the engine 15 and the heat-exchanger 17 and so forth in the device accommodation space 11 from the upper side.

The indicated at 24 are front and rear reinforcing members provided on the inner side face located on the side of the device accommodation space 11 of the plate member 23 for reinforcing the thin plate member 23 from inside. Here, each reinforcing member 24 is formed by bending a steel sheet material or the like, for example, and firmly secured to the inner side face of the plate member 23 by using such means as a screw or a bolt (not shown), in a state of extending in a direction from upper to lower along the bent shape of the plate member 23. In addition, a plural number of female screw holes 24A, to which a bolt 30 as will be described later is screwed, are provided on a lower end side of the reinforcing member 24, and a hinge member 31 as will be described later is secured to an upper end part of the reinforcing member 24 by using such means as welding.

The indicated at 25 is a side face separate cover element constituting a lower side portion of the device cover 21 for covering the device accommodation space 11 from the right side. As shown in Fig. 6 and Fig. 7, the side face separate cover element 25 is constituted by a plate member 26 and each reinforcing member 27 as will be described later.

The indicated at 26 is the plate member becoming the main body portion of the side face separate cover element 25 and formed in a thin plate shape by using the resin material, for example. The plate member 26 constitutes the side face 21B of the device cover 21, and covers the engine 15 and the heat-exchanger 17 and so forth in the device accommodation space 11 from the right side.

The indicated at 27 are the front and rear reinforcing members, provided on the inner side face located on the side of the device accommodation space 11 of the plate member 26 for reinforcing the thin plate member 26 from inside. Here, each reinforcing member 27 is formed by bending the steel sheet material or the like, for example, and secured to the inner side face of the plate member 26 by using such means as the screw or the bolt (not shown), in a state of extending in a direction from upper to lower along the bent shape of the plate member 26. Further, a plural number of female screw holes 27A, to which the bolt 30 as will be described later is screwed, are formed on the upper end side of each reinforcing member 27. The width dimension of each reinforcing member 27 is set to the same width dimension as that of each reinforcing member 24 constituting the upper face separate cover element 22, and an interval between each reinforcing member 27 in the front and rear directions is set to be the same interval as that between each reinforcing member 24 in the front and rear directions.

The indicated at 28 is a joint position becoming a separate position between the upper face separate cover element 22 and the side face separate cover element 25 constituting the device cover 21. The joint position 28 is located between the side face 21B and the bent face 21C of the device cover 21, and is extended in a direction from front to rear. Then, the upper face separate cover element 22 and the side face separate cover element 25 are connected to each other by using each connecting plate 29 as will be described later at the joint position 28.

The indicated at 29 are front and rear connecting plates serving as connecting members for connecting between the upper face separate cover element 22 and the side face separate cover element 25, so that they can be separated from each other. As shown in Fig. 7, each connecting plate 29 is located at the joint position 28 between the upper face separate cover element 22 and the side face separate cover element 25. In this case, the connecting plate 29 is formed by using channel steel having a U-shaped sectional shape, for example. In addition, on the connecting plate 29, a plural number of bolt insertion holes 29A are respectively bored at the position corresponding to each female screw hole 24A of the reinforcing member 24 constituting the upper face separate cover element 22 and each female screw hole 27A of the reinforcing member 27 constituting the side face separate cover element 25.

Then, the connecting plate 29 is fit into the reinforcing member 24 of the upper face separate cover element 22 and the reinforcing member 27 of the side face separate cover element 25, and the bolt 30 inserted into the insertion hole 29A of each bolt of the connecting plate 29 is screwed into each female screw hole 24A of the reinforcing member 24 and each female screw hole 27A of the reinforcing member 27.

With this structure, the upper face separate cover element 22 and the side face separate cover element 25 are connected to each other by each connecting plate 29, and the upper face separate cover element 22 and the side face separate cover element 25 are integrally formed with the joint position 28 interposed there between. This contributes to forming the device cover 21 having a large area.

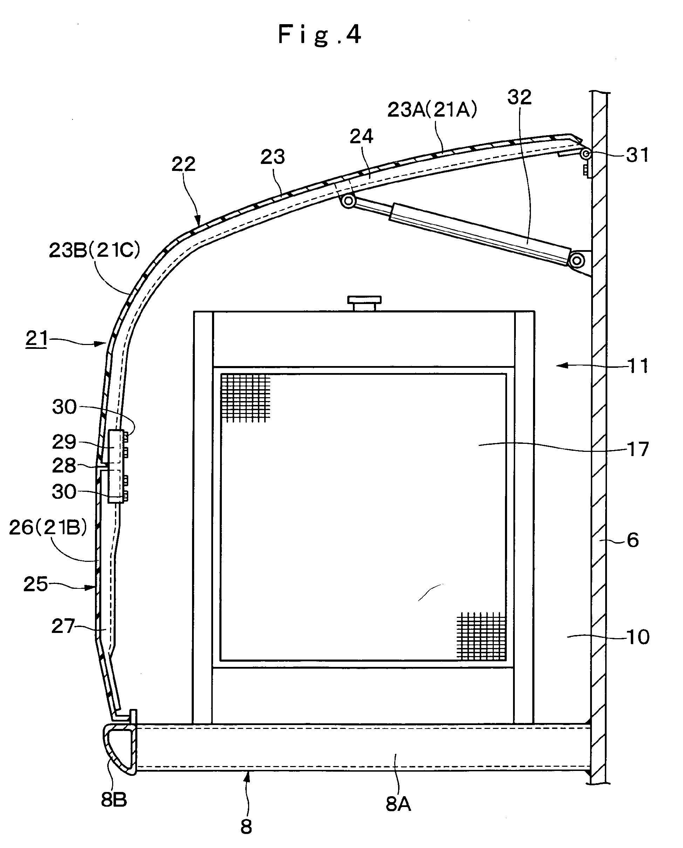

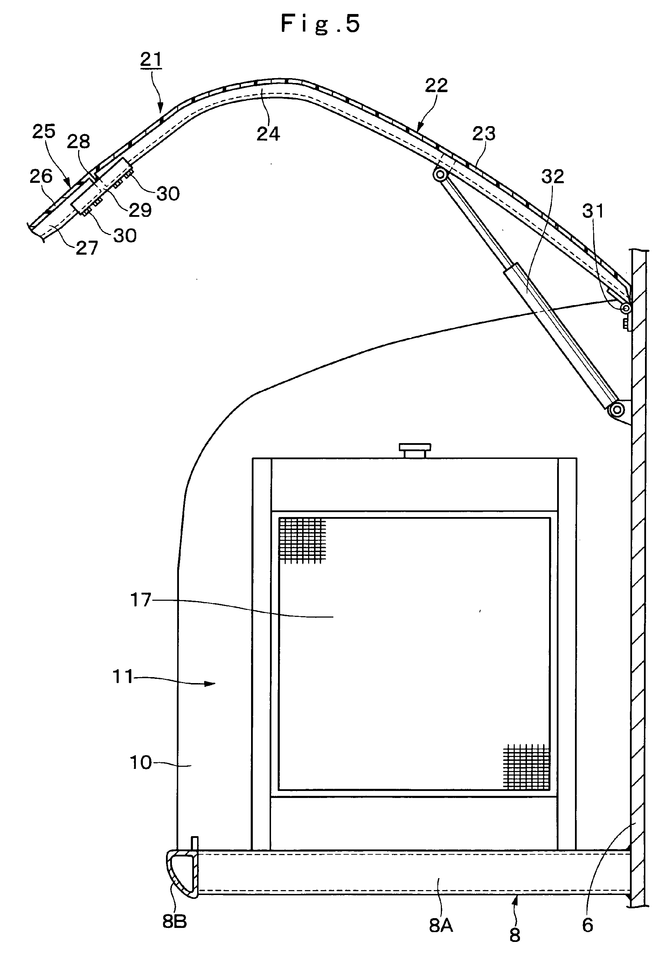

The indicated at 31 is a hinge member which pivotally support the device cover 21 on the frame 3. As shown in Fig. 4 and Fig. 5, one end side of the hinge member 31 is firmly secured to the upper end part of the reinforcing member 24 constituting the upper face separate cover element 22, and the other end side of the hinge member 31 is secured to the right vertical plate 6 of the frame 3.

Accordingly, the device cover 21 formed by connecting the upper face separate cover element 22 and the side face separate cover element 25 is integrally rotated in a direction from upper to lower with the hinge member 31 as the center, between a close position closing the device accommodation space 11 as shown in Fig. 4 and an open position opening the device accommodation space 11 as shown in Fig. 5.

The indicated at 32 is a gas spring provided between the frame 3 and the device cover 21. As shown in Fig. 4 and Fig. 5, one end side of the gas spring 32 is rotatably attached to the right vertical plate 6 of the frame 3, and the other end side of the gas spring 32 is rotatably attached to the upper face separate cover element 22 of the device cover 21. In this state, the gas spring 32 constantly energizes the device cover 21 from the close position to the open position, and holds the device cover 21 in the open position.

The indicated at 33 is a lock mechanism provided in the side face separate cover element 25 of the device cover 21. The lock mechanism 33 holds the device cover 21 in the close position by fitting into a clip (not shown) provided on the side of the frame 3, when the device cover 21 is set in the close position.

The lift truck 1 according to the embodiment is provided with the device cover 21 as mentioned above. Firstly, for handling freight goods by the use of the lift truck 1, as shown in Fig. 1, the freight goods (not shown) is loaded on the loading tool 20 in the condition that the boom 19 falls to the ground, and in this state, the lift truck 1 run automotively to a working spot.

In this case, as shown in Fig. 1, the upper face 21A of the device cover 21 is formed so that the height dimension from the ground is gradually decreased from the rear end portion 21A2 to the front end portion 21A1. Therefore, when an operator in the cab 14 views the right frontward, the visual field of the operator can be largely secured, thus improving safety when the vehicular body 2 is put in travel.

Then, after the vehicular body 2 is stopped at the working spot, by operating the working device 18 by the operator in the cab 14, the boom 19 is lifted against the vehicular body 2, the second boom 19B is extended out of the first boom 19A, and the third boom 19C is extended out of the second boom 19B. Thus, the freight goods loaded on the loading tool 20 can be transported from the ground to a predetermined unloading spot.

When an inspection work is performed for the engine 15, the hydraulic pump 16, and the heat-exchanger 17 or the like accommodated in the device accommodation space 11, as shown in Fig. 2 and Fig. 5, the lock mechanism 33 is unlocked, and the device cover 21 is rotated to the open position. Then, the device accommodation space 11 is largely opened, and the inspection work can be easily performed for the devices such as the engine 15, the hydraulic pump 16, and the heat-exchanger 17 and so forth accommodated therein. In this case, since the device cover 21 which is formed by the upper face separate cover element 22 and the side face separate cover element 25 is integrally constructed by the connecting plate 29, the device accommodation space 11 can be easily opened and closed by one opening and closing operation of the device cover 21.

Meanwhile, during traveling of the lift truck 1, when the side face separate cover element 25 of the device cover 21 makes a contact with an obstruction and it is broken, for example, only the side face separate cover element 25 thus broken can be separated from the upper face separate cover element 22, by removing each connecting plate 29 connecting between the upper face separate cover element 22 and the side face separate cover element 25. Then, the broken side face separate cover element 25 is replaced with a new side face separate cover element 25, which is then easily connected to the upper face separate cover element 22 by using each connecting plate 29.

As described above, in the embodiments of the present invention, the device cover 21 is constituted by two sheets of separate elements formed of the upper face separate cover element 22 and the side face separate cover element 25. Therefore, for example, when the side face separate cover element 25 makes contact with obstacles or the like and it is broken, repairing of the broken device cover 21 can be performed by only replacing this side face separate cover element 25 to the upper face separate cover element 22 with less frequency of breakage. Accordingly, the entire body of the device cover 21 should not be replaced, and therefore workability can be improved when performing the repairing of the broken device cover 21, and also a cost for repairing the device cover 21 can be reduced.

Further, according to the embodiments of the present invention, when the device cover 21 having a large area is formed by connecting the upper face separate cover element 22 and the side face separate cover element 25, which are mutually formed as a separate member, the manufacturing cost of the device cover 21 can be reduced, compared with a case where one sheet of device cover is integrally formed, for example.

In addition, when a part of the device cover 21 is broken, the entire body of the device cover 21 should not be replaced. Instead, only one of the upper face separate cover element 22 and the side face separate cover element 25, which is broken, can be replaced. Accordingly, the workability can be improved when the repairing of the broken device cover 21 is performed, and also the cost required for the repairing work can be reduced, compared with the case that the entire body of the device cover 21 is replaced.

Further, the upper face separate cover element 22 constituting the device cover 21 is formed by the plate member 23 and the reinforcing member 24 reinforcing the plate member 23, and the side face separate cover element 25 is formed by the plate member 26 and the reinforcing member 27 reinforcing the plate member 26. Therefore, a strength of the upper face separate cover element 22 and the side face separate cover element 25 can be increased, and the strength of the entire body of the device cover 21 formed by connecting the upper face separate cover element 22 and the side face separate cover element 25 can be increased.

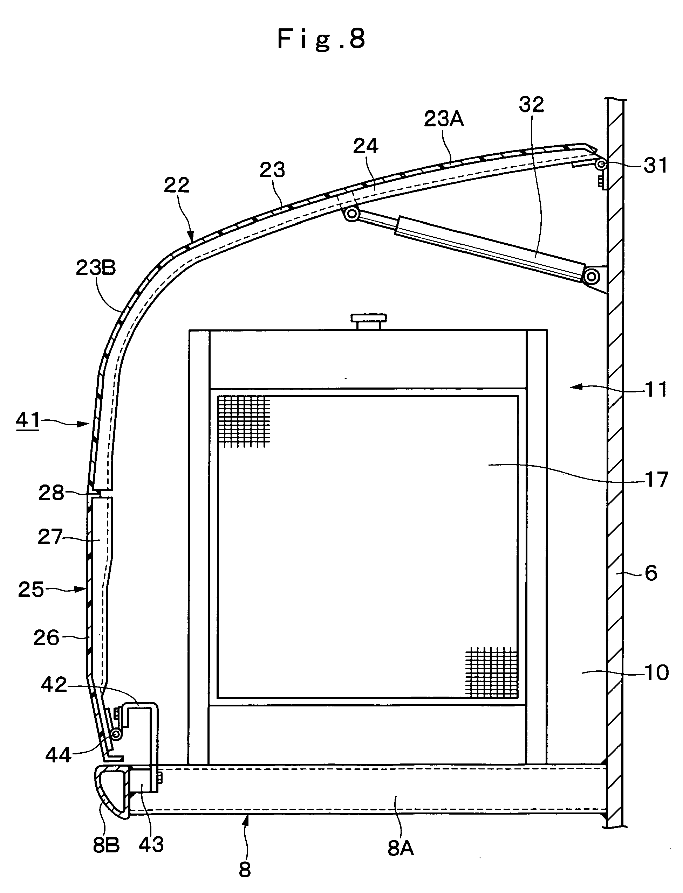

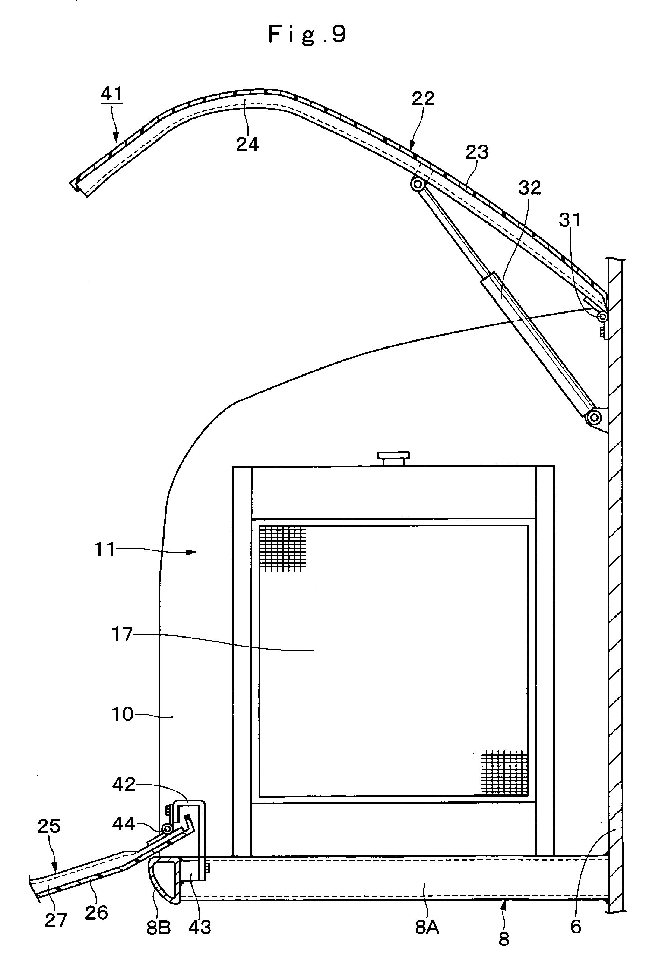

Next, referring to Fig. 8 and Fig. 9, there is shown a second embodiment of the present invention. In the second embodiment, a plural number of separate cover elements are independently opened and closed in a mutually separated state. In the following description of the second embodiment, those component parts which are identical with the counterparts in the foregoing first embodiment are simply designated by the same reference numerals or characters to avoid repetitions of same descriptions.

In the figures, the indicated at 41 is the device cover used in the embodiment of the present invention, replacing the device cover 21 according to the first embodiment. In the same way as the device cover 21 according to the first embodiment, the device cover 41 is formed by the upper face separate cover element 22 and the side face separate cover element 25 which are separated at the joint position 28 and are mutually formed as separate members.

However, in the device cover 41 according to this embodiment, the upper face separate cover element 22 is pivotally supported on the frame 3 by using the hinge member 31, and the side face separate cover element 25 is pivotally supported on the device supporting portion 8 of the frame 3 by using a hinge member 44 as will be described later. Accordingly, in the embodiment of the present invention, the upper face separate cover element 22 and the side face separate cover element 25 are not integrally formed and this is a different point compared with the device cover 21 according to the first embodiment.

The indicated at 42 is a bracket attached to the longitudinal beam 8B constituting the device supporting portion 8 of the frame 3. The bracket 42, to which the hinge member 44 as will be described later is attached, is formed by bending the steel sheet material or the like in a reversed J-shape. Then, the lower end side of the bracket 42 is firmly secured to the longitudinal beam 8B through a spacer 43, and the upper end side of the bracket 42 is projected into the device accommodation space 11.

The indicated at 44 is the hinge member with which the side face separate cover element 25 is pivotally supported on the frame 3. One end side of the hinge member 44 is secured to the lower end part of the reinforcing member 24 constituting the side face separate cover element 25, and the other end side of the hinge member 44 is secured to the upper end part of the bracket 42. Accordingly, the side face separate cover element 25 is rotated in a direction from upper to lower, with the hinge member 44 as the center, between the close position closing the device accommodation space 11 as shown in Fig. 8, and the open position opening the device accommodation space 11 as shown in Fig. 9.

Meanwhile, the upper face separate cover element 22 is rotated in a direction from upper to lower, with the hinge member 31 as the center, between the close position closing the device accommodation space 11 as shown in Fig. 8, and the open position opening the device accommodation space 11 as shown in Fig. 9.

In this way, the upper face separate cover element 22 and the side face separate cover element 25 constituting the device cover 41 are connected to each other at the joint position 28 when the separate cover elements are set in the close position as shown in Fig. 8, and separated from each other when the separate cover elements are set in the open position as shown in Fig. 9. The upper face separate cover element 22 opens and closes the device accommodation space 11, with the hinge member 31 as the center, in an independent state from the side face separate cover element 25, and the side face separate cover element 25 opens and closes the device accommodation space 11, with the hinge member 44 as the center, in the independent state from the upper face separate cover element 22.

With this structure, as shown in Fig. 9, when the upper face separate cover element 22 and the side face separate cover element 25 are respectively set in the open position, a large working space can be secured around the device accommodation space 11. Accordingly, the workability can be enhanced when the inspection is performed for the devices such as the heat-exchanger 17 or the like accommodated in the device accommodation space 11.

The device cover 41 according to the second embodiment has aforementioned structure, and a basic action thereof is not so much different from that of the device cover 21 according to the first embodiment.

However, in the device cover 41 according to the second embodiment, the upper face separate cover element 22 is rotated in a direction from upper to lower, with the hinge member 31 as the center, and the side face separate cover element 25 is rotated in a direction from upper to lower, with the hinge member 44 as the center. With this structure, when the upper face separate cover element 22 and the side face separate cover element 25 are respectively set in the open position, the large working space can be secured around the devices accommodated in the device accommodation space 11, thus enhancing the workability of the inspection work for the devices.

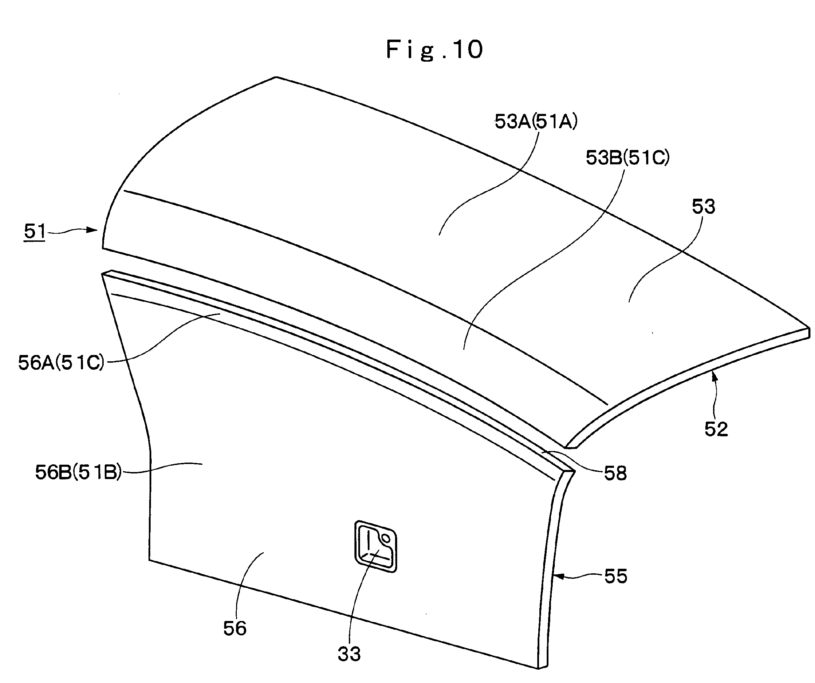

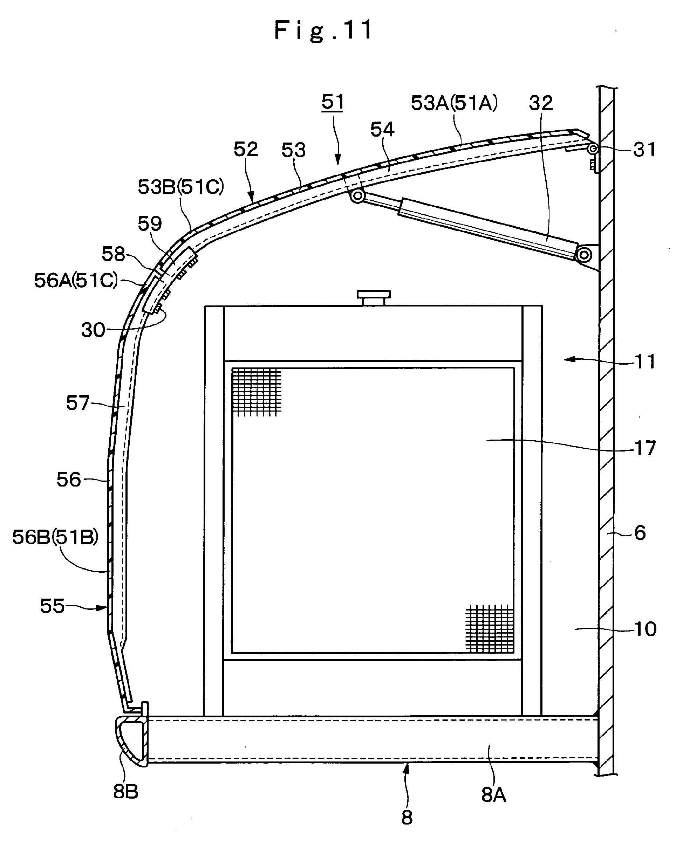

Next, referring to Fig. 10 and Fig. 11, there is shown the third embodiment of the present invention. In the third embodiment, each separate cover element is separated at the position of the bent face of the device cover. In the following description of the second embodiment, those component parts which are identical with the counter parts in the foregoing first embodiment are simply designated by the same reference numerals or characters to avoid repetitions of same descriptions.

In the figure, the indicated at 51 shows a device cover used in this embodiment replacing the device cover 21 according to the first embodiment. In almost the same way as aforementioned first embodiment, the device cover 51 is almost formed in a bent L-shape by an upper face 51A located at the upper part of the engine 15 or the like covering the device accommodation space 11 from the upper side, the side face 51B located at the right side direction of the engine 15 or the like covering the device accommodation space 11 from the right side direction, and a convex curved bent face 51C connecting between the upper face 51A and the side face 51B.

In addition, in the same way as the first embodiment, the device cover 51 is constituted by connecting the upper face separate cover element 52 and the side face separate cover element 55 to each other which will be described later. However, in this embodiment, the upper face separate cover element 52 and the side face separate cover element 55 are separated from each other at a joint position 58 located at the position of the bent face 51C of the device cover 51, and this is the different point from the device cover 21 according to the first embodiment.

The indicated at 52 is the upper face separate cover element constituting the upper side portion of the device cover 51. The upper face separate cover element 52 covers the devices accommodated in the device accommodation space 11 from the upper side. Also, the upper face separate cover element 52 is constituted by a plate member 53 and each reinforcing member 54 as will be described later.

The indicated at 53 is the plate member becoming the main body portion of the upper face separate cover element 52. The plate member 53 is formed in a thin plate shape by using the resin material, for example. The plate member 53 is constituted by an upper face portion 53A constituting the upper face 51A of the device cover 51, and a bent face portion 53B constituting the upper side part of the bent face 51C of the device cover 51 for covering the heat-exchanger 17 or the like in the device accommodation space 11 from the upper side.

In this case, the bent face portion 53B of the plate member 53 constitutes only the upper side part of the bent face 51C constituting the device cover 51, and therefore the curvature of the bent face portion 53B can be made small. With this structure, the plate member 53 including the bent face portion 53B can be easily formed.

The indicated at 54 is the reinforcing member provided on the inner side face located on the side of the device accommodation space 11 of the plate member 53. By the reinforcing member 54, the thin plate member 53 is reinforced from inside. The reinforcing member 54 is formed by bending the steel sheet material or the like, for example, and firmly secured to the inner side face of the plate member 53 by using the means such as the screw or the bolt and so forth (not shown) in an extended state in a direction from upper to lower along the bent shape of the plate member 53. On the lower end side of the reinforcing member 54, a plural number of female screw holes (not shown), to which the bolt 30 is screwed, are screwed, and on the upper end part of the reinforcing member 54, the hinge member 31 is firmly secured by using the means such as welding.

The indicated at 55 is the side face separate cover element constituting the lower side portion of the device cover 51. The side face separate cover element 55 covers the devices accommodated in the device accommodation space 11 from the right side direction. The side face separate cover element 55 is constituted by a plate member 56 and each reinforcing member 57 as will be described later.

The indicated at 56 is the plate member becoming the main body portion of the side face separate cover element 55. The plate member 56 is formed in a thin plate shape by using the resin material, for example. In addition, the plate member 56 is constituted by a bent face portion 56A constituting the lower side part of the bent face 51C of the device cover 51, and a side face portion 56B constituting the side face 51B of the device cover 51, and covers the heat-exchanger 17 or the like in the device accommodation space 11 from the right side direction.

In this case, the bent face portion 56A of the plate member 56 constitutes only the lower side part of the bent face 51C constituting the device cover 51, and therefore the curvature of the bent face portion 56A can be made small. With this structure, the plate member 56 including the bent face portion 56A can be easily formed.

The indicated at 57 is the reinforcing member provided on the inner side face located on the side of the device accommodation space 11 of the plate member 56. By the reinforcing member 57, a thin plate member 56 reinforced from inside. The reinforcing member 57 is formed by bending the steel sheet material or the like, for example, and secured to the inner side face of the plate member 56 by using the means such as the screw or the bolt and so forth (not shown) in the extended state in a direction from upper to lower along the bent shape of the plate member 56. On the upper end side of the reinforcing member 57, a plural number of female screw holes (not shown), to which the bolt 30 is screwed, are formed.

The indicated at 58 is the joint position between the upper face separate cover element 52 and the side face separate cover element 55 constituting the device cover 51. The joint position 58 is located at a part of the bent face 51C of the device cover 51 where the curvature becomes maximum, and extended in the front and rear directions. Then, the upper face separate cover element 52 and the side face separate cover element 55 are connected to each other by using the connecting plate 59 which will be described later at the position of the joint position 58.

The indicated at 59 is the connecting plate serving as the connecting member for separably connecting between the upper face separate cover element 52 and the side face separate cover element 55. The connecting plate 59 is located at the joint position 58 between the upper face separate cover element 52 and the side face separate cover element 55. Then, the connecting plate 59 is formed by bending channel steel having a U-shaped sectional shape, for example, in a circular curved state along the shape of the reinforcing member 54 of the upper face separate cover element 52 and the reinforcing member 57 of the side face separate cover element 55. In the connecting plate 59, a plural number of bolt insertion holes (although they are all not shown) corresponding to each female screw hole of the reinforcing member 54 and each female screw hole of the reinforcing member 57 are bored.

As shown in Fig. 11, the reinforcing member 54 of the upper face separate cover element 52 and the reinforcing member 57 of the side face separate cover element 55 are fit into the connecting plate 59, and the bolt 30 inserted into the bolt insertion hole of the connecting plate 59 is screwed into each female screw hole of the reinforcing member 54 and each female screw hole of the reinforcing member 57. Thus, the upper face separate cover element 52 and the side face separate cover element 55 are connected by the connecting plate 59, and the device cover 51 having a large area can be thereby formed.

Then, the device cover 51 formed by connecting the upper face separate cover element 52 and the side face separate cover element 55 opens and closes the device accommodation space 11 by integrally rotating in a direction from upper to lower, with the hinge member 31 as the center.

The third embodiment has aforementioned device cover 51, and the basic action is not different from the device cover 21 according to the first embodiment.

However, the device cover 51 according to the third embodiment is constituted by the upper face separate cover element 52 and the side face separate cover element 55 which are separated at the position where the curvature of the bent face 51C becomes maximum. In addition, by connecting the bent face portion 53B of the plate member 53 constituting the upper face separate cover element 52 and the bent face portion 56A of the plate member 56 constituting the side face separate cover element 55 at the joint position 58, the bent face 51C of the device cover 51 having a protruding arcuate shape is formed.

With this structure, the curvature of the bent face portion 53B of the plate member 53 and the curvature of the bent face portion 56A of the plate member 56 can be made small. Therefore, the plate member 53 including the bent face portion 53B and the plate member 56 including the bent face portion 56A can easily be formed. As a result, this contributes to further reducing the manufacturing cost of the upper face separate cover element 52 and the side face separate cover element 55.

In the aforementioned first embodiment, by way of example, the device cover 21 is shown as being constituted by two sheets of separate cover elements such as the upper face separate cover element 22 and the side face separate cover element 25.

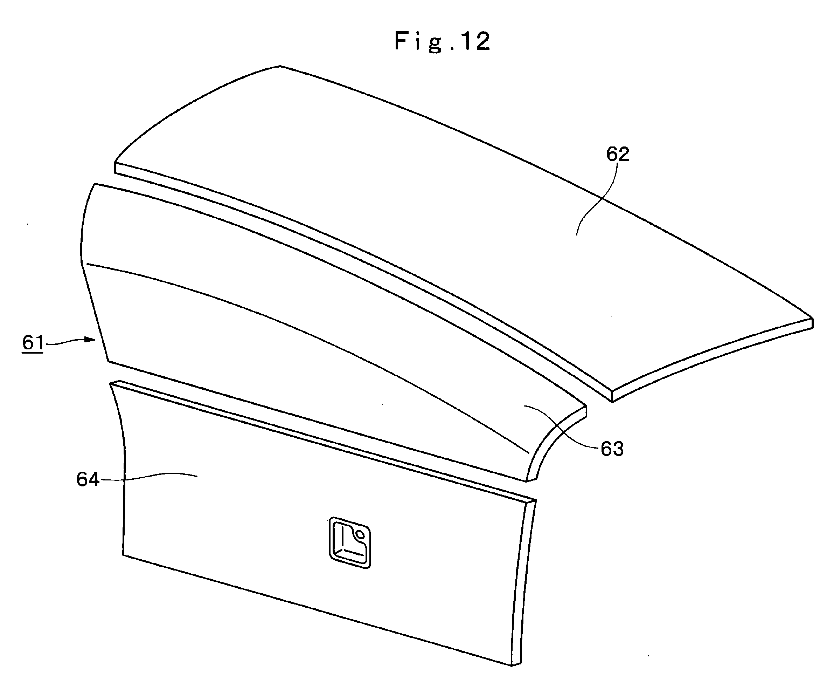

However, the present invention is not limited thereto, and for example, like a modified example shown in Fig. 12, one sheet of device cover 61 may be constituted by three sheets of separate cover elements 62, 63 and 64, and further may be constituted by four sheets or more of separate cover elements.

Further, in aforementioned first embodiment, by way of example, the plate member 23 of the upper face separate cover element 22 and the plate member 26 of the side face separate cover element 25 are shown as being formed by using the resin material. However, the present invention is not limited thereto, and for example, these plate members 23 and 26 may be formed by using the thin steel sheet material and so forth. This can be said for the second and third embodiments.

Further, in aforementioned first embodiment, by way of example, the upper face separate cover element 22 and the side face separate cover element 25 constituting the device cover 21 are shown as being separably connected by using the connecting plate 29 and the bolt 30. However, the present invention is not limited thereto, and for example, the reinforcing member 24 of the upper face separate cover element 22 and the reinforcing member 27 of the side face separate cover element 25 may be secured by the means such as welding. This can be said for the device cover 51 according to the third embodiment.

Still more, in aforementioned embodiments, the engine 15 accommodated in the device accommodation space 11 is exemplified as being arranged in a longitudinally placed state extended in a direction from front to rear along the frame 3. However, the present invention is not limited thereto, and for example, the engine 15 may be arranged in a crosswise placed state extended in the lateral direction, and the hydraulic pump 16 attached to the engine 15 may be located between the vertical plates 5 and 6 on the right and left side of the frame 3.

More further, in each of the embodiment as described above, the lift truck 1 is exemplified as being used for handling freight goods, serving as the working machine, to which the device covers 21 (41, 51, and 61) are applied. However, the present invention is not limited thereto, and for example, can be widely applied to the working machine such as the hydraulic excavator, a hydraulic crane and a wheel loader, equipped with the device cover having a large area.

## Claims

1. A working machine including an automotive vehicular body and a working device mounted on said vehicular body, the vehicular body providing a frame constituting a support structure, an engine mounted on said frame, and a device cover for openably and closably covering devices including an engine and for internally defining therein a device accommodation space, **characterized in that**:
said device cover has a bent L-shape by being formed with an upper face located above said devices, a side face located on a side of said devices, and a convex curved bent face connecting said upper face and said side face,
said device cover being constituted by a plural number of separate cover elements separated at a joint position extending in a direction from front to rear.

2. A working machine as defined in claim 1, wherein said plural number of separate cover elements are constituted by plate members covering said devices, and a reinforcing member provided on said plate members extended in a direction from upper to lower along the bent shape.

3. A working machine as defined in claim 1, wherein a connecting member is provided at a joint position close to separate cover elements of the device cover, and said plural number of separate cover elements are mutually connected together by using the connecting member.

4. A working machine as defined in claim 1, wherein said device cover is arranged to be integrally opened and closed when the plural number of separate cover elements are connected together at said joint position.

5. A working machine as defined in claim 1, wherein said device cover is integrally constituted by the plural member of separate cover elements connected at said joint position, and an upper face side of said device cover is attached openably and closably to said frame.

6. A working machine as defined in claim 1, wherein the plural number of separate cover elements are attached to said frame so as to be individually opened and closed, and each of the separate cover elements is independently opened and closed.

7. A working machine as defined in claim 1, wherein said device cover is constituted in a manner such that the plural number of separate cover elements are separated at the position of the bent face.

8. A working machine as defined in claim 1, wherein said device cover is constituted by two pieces of separate cover elements including an upper face separate cover element covering an upper portion of said devices, and a side face separate cover element covering a side portion of said devices.

9. A device cover used in a working machine for openably and closably covering devices including an engine provided in a working machine to internally define a device accommodation space, **characterized in that**;
said device cover is constituted by the plural number of separate cover elements separated at a joint position extending in a direction from front to rear and connected at said joint position, and said device cover is formed a bent L-shape with an upper face located above said devices, a side face located on the side of said devices, and a convex curved bent face connecting said upper face and side face.
